# EUROPEAN PATENT APPLICATION

(11) **EP 1 209 460 A2**
(43) Date of publication of application: **29.05.2002**
(21) Application number: 01402968.0
(22) Date of filing: 19.11.2001
(51) Int. Cl.: G01N 3/32

(54) **Bend test device for an electrical cable or wire harness**

(30) Priority: 21.11.2000 JP 2000354496
(71) Applicant: Sumitomo Wiring Systems, Ltd., Yokkaichi-City, Mie, 510-8503 (JP)
(72) Inventor: Onoue, Hisayoshi, Yokkaichi-city, Mie 510-8503 (JP)
(74) Representative: Uchida, Kenji

(57) **Abstract**

The bend test device (10) comprises a fixed stand (12) for fixing a first fixing point of an electrical cable (11) or wire harness, and a mobile stand (13) for fixing a second fixing point of the electrical cable (11) or wire harness, the mobile stand (13) being placed at a given distance from the fixed stand (12). The bend test device (10) further comprises a reciprocating means (14) for enabling the mobile stand (13) to move freely to-and-fro relative to the fixed stand (12) along the reciprocation axis (P). The reciprocating means (14) in turn comprises a shift-regulating means for defining the reciprocation distance of the mobile stand (13) relative to the fixed stand (12). The first and second fixing points of the respective fixed and mobile stands (12, 13) are placed on the same elevation level, so that the electrical cable (11) or wire harness is bent constantly at its middle point between the first and second fixing points.

## Description

The present invention relates to a bend test device or machine for evaluating the life span of an electrical cable, or of a wire harness containing several such electrical cables. Electrical cables and wire harnesses are sometimes used under conditions in which they are subjected to repeated bending, for instance when used in a door for vehicles, e.g. automobiles. In such a case, the life span of a cable or wire harness can be evaluated by counting the number of bending cycles until the cable or harness snaps, under repeated bending-and-stretching conditions.

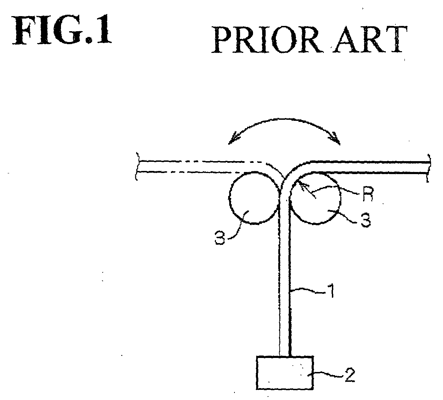

There exists a bend test method for such an electrical cable, for instance, based on the JIS Standards. According to this method, one end portion of an electrical cable 1 is linked to a weight 2, whilst its other end portion is led through between two guide rolls 3 having a given radius R, and turned around one of the guide rolls 3 at an angle of 90° (see Fig.1). The electrical cable is then reversed to the other guide roll 3 by an angle of 180°, and the tilting movement between the two guide rolls 3 is repeated. The number of bending cycles performed before snapping of the cable is counted, and gives a measure of the "break" life for the cable.

According to the above method, the test can only be performed around the radius R defined by the guide rolls 3. The obtained results are therefore poorly related to real situations where bending radius differs from one situation to another.

It is therefore an object of the present invention to provide a bend test device which allows electrical cables or wire harnesses to be tested under the conditions similar to actual conditions of use.

To this end, there is provided a bend test device for repeatedly bending an electrical cable or wire harness between first and second fixed points thereof and counting the number of bending cycles leading to a break condition.

The bend test device comprises a fixed stand with which the first fixed point of the electrical cable or wire harness is held, and a mobile stand with which the second fixed point thereof is held.

The bend test device further comprises a means for reciprocating the mobile stand relative to the fixed stand along a reciprocation axis, such that the mobile stand moves substantially freely to-and-fro along a predetermined shift distance.

The reciprocating means then comprises a system for regulating the predetermined shift distance.

Preferably, the reciprocating means comprises a slide rail extending along the reciprocation axis, a sliding means mounted on the mobile stand such as to slide freely along the slide rail, a drive link adapted to be linked to a driving axle of a driving motor, and a gear link coupling the drive link with the sliding means.

Typically, the regulating system comprises a drive link including an oblong hole extending over the length thereof, and the gear link has first and second tips, the first tip being linked to the sliding means, whilst the second tip is linked to the drive link through a given position along the oblong hole and fixed thereto, such that the predetermined shift distance can be modified by choosing the given position.

Alternatively, the regulating system may comprise a gear link including an oblong hole extending over the length thereof, and the gear link has a first tip linked to the sliding means, whilst the drive link has a first tip, distal from the driving axle, linked to the gear link through a given position along the oblong hole and fixed thereto, such that the predetermined shift distance can be modified by choosing the given position.

Alternatively or in addition, the regulating system may comprise a base stand including an oblong hole extending over the length thereof, and the fixed stand is mounted on the base stand through a given position along the oblong hole and fixed thereto, such that the predetermined shift distance can be modified by choosing the given position.

Suitably, the first and second fixed points of the electrical cable or wire harness held by the respective fixed and mobile stand are placed substantially on the same elevation level.

The above, and the other objects, features and advantages of the present invention will be made apparent from the following description of the preferred embodiments, given as non-limiting examples, with reference to the accompanying drawings, in which:
Fig. 1 schematically shows a known bend test method;
Fig.2 is a side view of a bend test device according to the present invention;

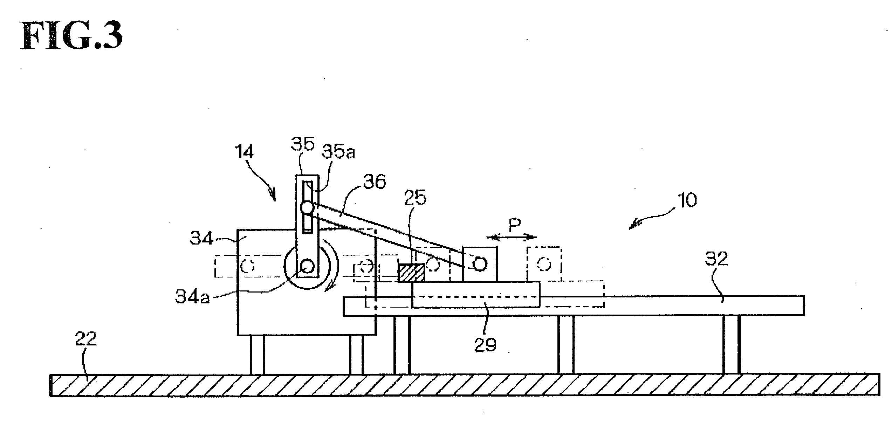

Fig.3 is another side view of the same bend test device;
Fig.4 is a top plan view of a fixed stand of the bend test device of the invention;
Fig.5 is an elevational sectional view of a fixed point for a cable in the fixed stand; and
Fig.6 is a side elevational view of a drive link of the bend test device of the invention.

The bend test device 10 of the invention comprises a fixed stand 12 for fixedly holding a first portion of an electrical cable 11 (or a wire harness, considered the same hereinafter), a mobile stand 13 which fixes a second portion of the electrical cable 11 and which can be moved, and a reciprocating means 14 for shifting the mobile stand 13 to-and-fro relative to the fixed stand 12, along a reciprocation axis P.

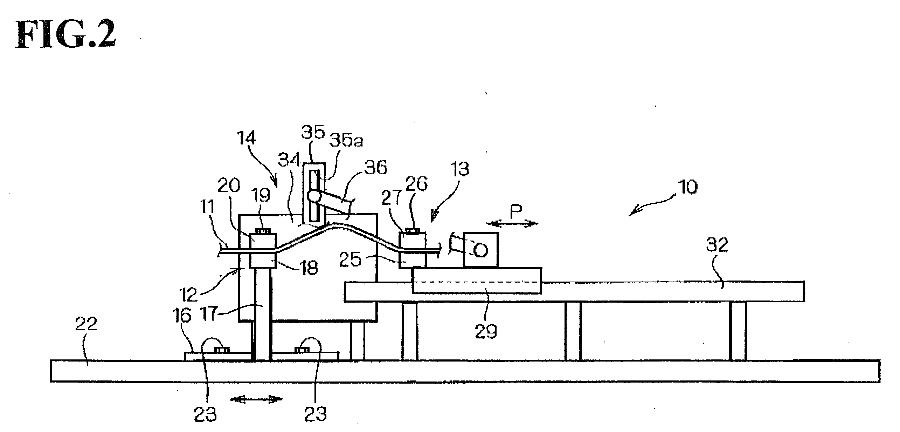

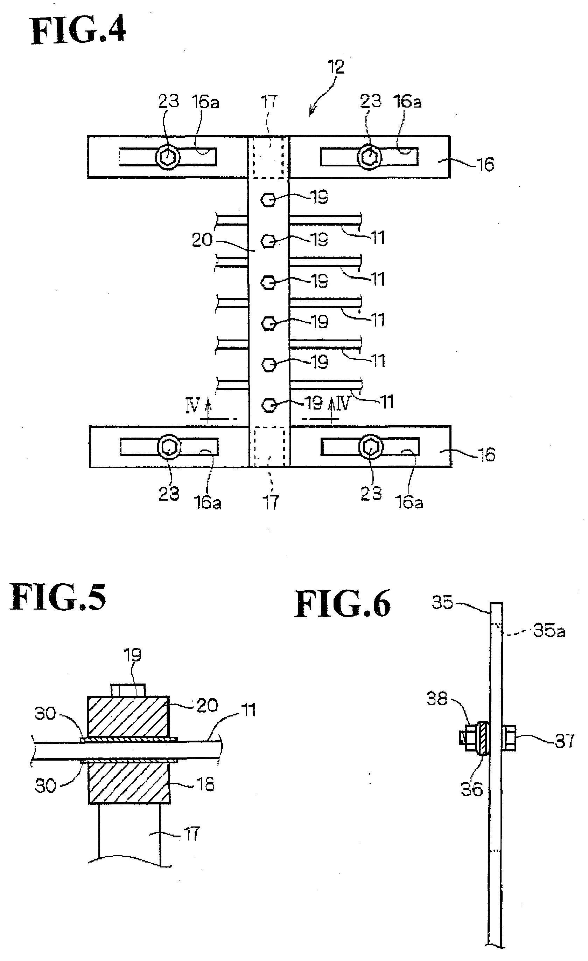

As shown in Figs.2 and 4, the fixed stand 12 comprises a pair of fixing strips 16placed in parallel with a given separation, a pair of columns 17 standing on the corresponding fixing strips 16, a fixed-side cable holder 18 installed transversally between the tops of the pair of columns 17, and a fixed-side clamping strip 20 (Fig.5) superposed on the fixed-side cable holder 18 and held by first bolts 19 in a freely engageable and removable way.

Each fixing strip 16 is provided with e.g. two bolt holes 16a respectively having a substantially oblong or rectangular shape arranged over the length of the strip 16. The fixed stand 12 is then fixed on a base stand 22 by second bolts 23 through the corresponding bolt holes 16a, in a freely engageable and removable way.

The base stand 22 is also provided with a plurality of threaded holes (not shown in the figures), arranged along the reciprocation axis P at a given pitch. These threaded holes can thus be engaged with the second bolts 23. The fixed stand 12 is then fixed to the base stand 22 by the second bolts 23 at a desired position, by choosing an appropriate pair of threaded holes formed in the base stand along the reciprocation axis P. Furthermore, the position of the fixed stand 12 can be adjusted along the reciprocation axis P by modifying the position of the second bolts 23 and second bolt holes 16a relative to the base stand 22.

The mobile stand 13 comprises a mobile-side cable holder 25 arranged transversally in opposition to the fixed-side cable holder 18, and a mobile-side clamping strip 27 superposed on the mobile-side cable holder 25, and fixed thereto by third bolts 26 in a freely engageable and removable way. One side of the mobile-side cable holder 25 is extended sideways, and fixed to a sliding means 29 mounted on the same side.

The cable holders 18 and 25 of the respective fixed stand 12 and mobile stand 13 have respectively a traverse shape, and are provided with means for holding a plurality of electrical cables 11 over their length at a given pitch.

Accordingly, each electrical cable 11 is held, through the cable-holding means, by the fixed-side cable holder 18 and clamping strip 20, whilst it is likewise held, through the cable-holding means, by the mobile-side cable holder 25 and clamping strip 27. Moreover, the cable-holding means on the fixed-side cable holder 18 and those on the mobile-side cable holder 25 are placed on the same elevation level, so that the electrical cable 11 is held and tested on the same level. Typically, an insulator sheet 30 is interposed between the electrical cable 11 and the cable holder 18 or 25, and between the electrical cable 11 and the clamping strip 20 or 27, as shown in Fig.5.

The sliding means 29 is held on a slide rail 32 fixed to the base stand 22, in a freely slidable way. The slide rail 32 extends horizontally along the reciprocation axis P. When the sliding means 29 supported by the slide rail 32 slides along the reciprocation axis P, the mobile stand 13 also moves to-and-fro freely along the axis P.

The reciprocating means 14 is equipped with a variable rotational speed driving motor 34 installed on the base stand 22 through the column 17. The driving motor 34 includes a driving axle 34a, and a drive link 35 having a given length and mounted e.g. integrally with the driving axle 34a in a freely rotatable way. There is also provided a gear link 36 having an appropriate length with first and second ends. The first end thereof is linked to the driving link 35, whilst the second end thereof is linked to the sliding means 29.

Further, the drive link 35 is provided with an oblong or rectangular adjusting hole 35a over the length thereof. As shown in Fig.6, the first end of the gear link 36 is linked with the driving link 35 through the adjusting hole 35a, so that their linking position can be modified freely along the adjusting hole 35a, and fixed or released by using a fourth bolt 37 and a fourth nut 38. Moreover, the first end of the gear link 36 can rotate around the axis of the fourth bolt 37. The length of the drive link 35 can thus be adjusted by changing the linking position of the gear link 36 located in the adjusting hole 35a.

The drive link 35 and the gear link 36 thus form a link mechanism. When the driving motor 34 is set into motion, the sliding means 29 is reciprocated through the link mechanism along the reciprocation axis P. The mobile stand 13 reciprocates along the axis P, in conjunction with the slider's movement. More specifically, the mobile stand 13 reciprocates relatively to the fixed stand 12 along the reciprocation axis P.

When a bend test is to be performed, a first portion of a desired number of electrical cables 11 (test samples) is fixed on the fixed stand 12, whilst a second portion thereof, located at a given distance from the first portion, is fixed on the mobile stand 13. In so doing, the insulator sheets 30 are inserted at both sides of the electrical cables 11, and the latter 11 are supplied with electric current.

When the driving motor 34 is started, the mobile stand 13, being coupled to the sliding means 29, reciprocates relatively to the fixed stand 12 along the reciprocation axis P through the link mechanism. By virtue of the reciprocating movement, each electrical cable 11 is bent over a radius R between the fixed and mobile stands 12 and 13, then stretched back, and this to-and-fro movement is repeated.

The break point of the electrical cable 11 can be detected by the cut-off of the current passing therethrough. The time, or the number of bending cycles, leading to an interruption in the current is counted, and serves to define the cable's life span under repeated bending (or resistance to bending).

Further, the linking position between the drive link 35 and the gear link 36 is adjusted along the oblong adjusting hole 35a, by first loosening the fixture between the fourth bolt 37 and nut 38, and retightening them. The total link length in the link mechanism is thus easily controlled, as is the amplitude of the to-and-fro movement of the sliding means 29. By adjusting this amplitude, the closest and remotest positions of the mobile stand 13, relative to the fixed stand 12, can be adjusted very easily. Likewise, the bending radius R of the electrical cable 11, at the closest position of the mobile stand 13 to the fixed stand 12, can be varied at will.

As such, a condition similar to the actual conditions of use can be created for a particular bend test.

The closest and remotest positions of the mobile stand 13, relative to the fixed stand 12, can also be adjusted by modifying the position of the second bolts 23 in the bolt holes 16a through which the second bolts 23 are fixed (the fixed stand 12 is thus moved relatively to the base stand 22). Such a fixing structure further facilitates the modification of the bending radius R.

As the cable fixing positions for the fixed and mobile stands 12 and 13 are placed on the same elevation level, the electrical cable 11 is bent constantly at its middle point between the fixed and mobile stands 12 and 13.

Further, as the electrical cable 11 is held via the insulator sheets 30, there is no risk of dielectric breakdown in the cable 11 due to an excessive clamping of the first and third bolts 19 and 26. Furthermore, the insulator sheets 30 enable the electrical cable 11 to keep its original shape. In addition, when the electrical cable 11 is a bared core cable, the insulator sheets 30 exert their primary function as insulators.

Although the above bend test device has been described mainly in the context of an application to an electrical cable 11, it may also be applied to a wire harness containing a bundle of electrical cables 11.

In the above embodiment, the position of the mobile stand 13 is regulated through the adjusting hole 35a provided in the drive link 35. Instead, the structure of the drive link 35 and gear link 36 may be modified, such that the adjusting hole is provided in the gear link 36.

Further, instead of the construction of driving motor 34, driving link 35 and gear link 36, the sliding means 29 may be reciprocated by a contraction and expansion movement, such as one produced by a pneumatic drive (air cylinder).

Furthermore, instead of using the structure of the mobile-side cable holder 25, in which only one end of the holder is fixed to the sliding means 29, both of its ends may be fixed to the corresponding sliding means 29.

In the bend test device of the invention, the conditions for the bend test can be changed by adjusting the extent of the reciprocation movement of the mobile stand. Accordingly, the life span of an electrical cable or a wire harness under repeated bending can be evaluated very precisely, by choosing a condition similar to the actual use condition.

Further, the fixed stand and the mobile stand are constructed such that first and second cable-holding sites are placed at substantially the same height level. In this manner, an electrical cable, when subjected to bend tests, is bent constantly at its middle point between the first and second cable-holding sites.

Furthermore, the structure of the reciprocating means according to the invention allows the effective length of the drive link or gear link to be regulated.

The extent of the reciprocation distance of the mobile stand can thus be adjusted by modifying the effective link length, so that the bend test can be performed under different conditions. The simulation of the actual use condition also becomes very easy, and the break-off life of an electrical cable or wire harness can be evaluated more precisely.

Moreover, the fixed stand may be mounted on the base stand such that the position of the former with respect to the latter can be chosen along the reciprocation axis.

Accordingly, the bending radius can be modified by shifting the position of the fixed stand on the base stand. Such a structure further facilitates the creation of a simulation condition.

## Claims

1. A bend test device (10) for repeatedly bending an electrical cable (11) or wire harness between first and second fixed points thereof and counting the number of bending cycles leading to a break condition, **characterised in that**;
said bend test device (10) comprises a fixed stand (12) with which said first fixed point of said electrical cable (11) or wire harness is held, and a mobile stand (13) with which said second fixed point thereof is held;
said bend test device (10) further comprises a means (14) for reciprocating said mobile stand (13) relative to said fixed stand (12) along a reciprocation axis (P), such that said mobile stand (13) moves substantially freely to-and-fro along a predetermined shift distance; and
said reciprocating means (14) comprises a system for regulating said predetermined shift distance.

2. The bend test device (10) according to claim 1, wherein said reciprocating means (14) comprises a slide rail (32) extending along said reciprocation axis (P), a sliding means (29) mounted on said mobile stand (13) such as to slide freely along said slide rail (32), a drive link (35) adapted to be linked to a driving axle (34a) of a driving motor (34), and a gear link (36) coupling said drive link (35) with said sliding means (29).

3. The bend test device (10) according to claim 2, wherein said regulating system comprises a drive link (35) including an oblong hole (35a) extending over the length thereof, and said gear link (36) has first and second tips, said first tip being linked to said sliding means (29), whilst said second tip being linked to said drive link (35) through a given position along said oblong hole (35a) and fixed thereto, such that said predetermined shift distance can be modified by choosing said given position.

4. The bend test device according to claim 2, wherein said regulating system comprises a gear link (36) including an oblong hole extending over the length thereof, and said gear link (36) has a first tip linked to said sliding means (29), whilst said drive link (35) has a first tip, distal from said driving axle (34a), linked to said gear link (36) through a given position along said oblong hole and fixed thereto, such that said predetermined shift distance can be modified by choosing said given position.

5. The bend test device (10) according to any one of claims 1 to 4, wherein said regulating system comprises a base stand (16) including an oblong hole (16a) extending over the length thereof, and said fixed stand (12) is mounted on said base stand (16) through a given position along said oblong hole (16a) and fixed thereto, such that said predetermined shift distance can be modified by choosing said given position.

6. The bend test device according to any one of claims 1 to 5, wherein said first and second fixed points of said electrical cable (11) or wire harness held by said respective fixed and mobile stand (12, 13) are placed substantially on the same elevation level.
